# EUROPÄISCHE PATENTANMELDUNG

(11) **EP 4 357 106 A1**
(43) Veröffentlichungstag der Anmeldung: **24.04.2024**
(21) Anmeldenummer: 22202029.9
(22) Anmeldetag: 17.10.2022
(51) Int. Cl.: B29C 48/92

(54) **VERFAHREN ZUM BETRIEB EINES EXTRUDERS, COMPUTERPROGRAMM, STEUERUNG UND EXTRUDER**

(71) Anmelder: Coperion GmbH, 70469 Stuttgart (DE)
(72) Erfinder: Schmudde, Markus, 71711 Steinheim a.d. Murr (DE); Heyn, Johannes, 73776 Altbach (DE); Dreher, Felix, 70374 Stuttgart (DE); Karrer, Tanja, 71297 Mönsheim (DE); Brausam, Stefan, 73326 Deggingen (DE)
(74) Vertreter: Ege Lee & Roider Patentanwälte

(57) **Zusammenfassung**

Verfahren zum Betrieb eines Extruders (100) umfassend wenigstens eine in einem Zylinder (104) drehbar aufgenommene und durch einen Motor (106) drehantreibbare Schneckenwelle (108), mit den Schritten: Erfassen (S11, S21) eines Drehmomentsignals, welches zumindest einer Antriebs- oder Schneckenwelle (108) zugeordnet ist, Erfassen (S12, S24) von maximalen Peaks des Drehmomentsignals, Vergleichen (S13, S25) der erfassten maximalen Peaks des Drehmomentsignals mit einem vorgegebenen Maximalwert für das Drehmoment, und Anpassen (S14, S26) des Drehmoments der zumindest einen Schneckenwelle (108) basierend auf dem Ergebnis des Vergleichs, sowie Computerprogramm, Steuerung (102) und Extruder (100).

## Beschreibung

Die Erfindung betrifft ein Verfahren zum Betrieb eines Extruders. Außerdem betrifft die Erfindung ein Computerprogramm, eine Steuerung sowie einen Extruder.

Verarbeitungsprozesse auf Extrudern, wie Doppelschneckenextrudern, haben verschiedenste Prozessgrenzen. Diese können zum Beispiel im Bereich der Zuführung der Ausgangsstoffe liegen, sog. einzugsbegrenzte Prozesse. Eine weitere typische Prozesslimitierung liegt in der Antriebsleistung des Extruders, sog. drehmomentlimitierte Prozesse. Trotz der heutzutage hohen Leistungsdichten moderner Extruder ist die Verarbeitung von thermoplastischen Kunststoffen, wie zum Beispiel Polyamid (PA) oder Polybutylenterephthalat (PBT), mit Fasern, wie Glasfasern, und anderer Kunststoffe immer noch über die Hauptantriebsleistung des Extruders und/oder die mechanische Festigkeit der Bauteile limitiert. Die Prozesse werden bei guter Produktqualität in einem Bereich von etwa 75 bis 95% der Maximaldrehzahl des Extruders gefahren. Somit wird auch die maximale Leistung des Motors, z.B. Asynchronmotors, nahezu ausgereizt. Maximale Drehzahlen von 95 bis 100 % der maximalen Drehzahl werden oft nicht genutzt.

Wie alle Prozesse unterliegen auch die drehmomentlimitierten Prozesse gewissen Schwankungen. Diese können z.B. durch die Dosieranlage, das Material, aber auch durch normale Schwankungen im Extrusionsprozess entstehen. Dies kann dazu führen, dass Messgrößen wie z.B. der Schneckenspitzendruck oder das Drehmoment des Hauptantriebs gewissen Schwankungsbreiten unterliegen. Speziell das Drehmomentsignal reagiert sehr schnell auf Prozessschwankungen, da es maßgeblich von der Materialmenge in der Aufschmelzzone beeinflusst werden kann. Das Drehmomentsignal ist ein in der Steuerung überwachtes Signal, das bei Überschreitung eines Schwellwertes (in Bezug zur mechanischen Ausführung der Anlage) eine Warnung auslöst und bei Überschreitung eines Maximalwertes zur Notabschaltung des Extruders bzw. zum Öffnen der Sicherheitskupplung im Antriebstrang führt, um den Motor von den Schneckenwellen mechanisch zu trennen. Eine Notabschaltung hat jedoch aufwendige Reinigungsarbeiten und weitere manuelle Eingriffe zur Folge, die die Produktivität der Extrusionsanlage, wie beispielsweise einer Compoundierlinie, verringern. Im schlimmsten Fall kann auch ein bleibender Maschinenschaden nicht verhindert werden.

Um diese Notabschaltungen zu vermeiden, wählen die Anlagenbetreiber einen sicheren Betriebspunkt, bei dem das Drehmomentniveau einen deutlichen Abstand zum Maximalwert einnimmt. Typischerweise werden die Extruder für solche Prozesse bei 80 bis 90% des maximalen Drehmoments betrieben. Aufgrund von Unsicherheit werden anlagenbetreiberseitig oft noch niedrigere Drehmomentenniveaus gefahren. Da Anlagenbediener das Drehmomentsignal jedoch nur in einer geringen Abtastrate auf dem Steuerungsdisplay ablesen können, haben diese nicht die Möglichkeit, die volle Schwankungsbreite des Signals zu erkennen. Die Anlagenbediener haben daher keine Chance auf eine fundierte Datenlage zur Beurteilung der tatsächlichen Schwankungsbreite, insbesondere bei stark schwankenden Prozessen.

Es hat sich jedoch gezeigt, dass eine Optimierung des Betriebspunktes hin zu einem höheren Drehmomentniveaus nicht produktionssicher möglich ist.

Der Erfindung liegt die Aufgabe zugrunde, ein eingangs genanntes Verfahren strukturell und/oder funktionell zu verbessern. Außerdem liegt der Erfindung die Aufgabe zugrunde, ein eingangs genanntes Computerprogramm strukturell und/oder funktionell zu verbessern. Ferner liegt der Erfindung die Aufgabe zugrunde, eine eingangs genannte Steuerung sowie einen eingangsgenannten Extruder strukturell und/oder funktionell zu verbessern.

Daher ist es insbesondere eine Aufgabe der vorliegenden Erfindung, ein Verfahren zum Betrieb eines Extruders bereitzustellen, welches die im Zusammenhang mit dem Stand der Technik aufgezeigten Probleme reduzieren bzw. beseitigen kann. Beispielweise ist es eine Aufgabe eine Optimierung des Betriebspunktes zu ermöglichen und/oder einen Betrieb bei einem höheren Drehmomentniveau produktionssicher zu gewährleisten.

Die Aufgabe wird gelöst mit einem Verfahren mit den Merkmalen des Anspruchs 1. Außerdem wird die Aufgabe gelöst mit einem Computerprogramm mit den Merkmalen des Anspruchs 16. Ferner wird die Aufgabe gelöst mit einer Steuerung mit den Merkmalen des Anspruchs 17 sowie einem Extruder mit den Merkmalen des Anspruchs 18. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Verfahren kann zum Betrieb eines Extruders sein oder dienen. Der Extruder kann einen Zylinder aufweisen. Der Extruder kann wenigstens eine Schneckenwelle, wie Extruderschnecke, aufweisen. Die wenigstens eine Schneckenwelle kann in dem Zylinder drehbar aufgenommen sein. Beispielsweise kann der Extruder zwei Schneckenwellen aufweisen. Der Extruder kann ein Einschneckenextruder, Mehrwellenextruder oder Doppelschneckenextruder sein. Der Extruder kann einen Motor aufweisen. Die wenigstens eine Schneckenwelle kann drehantreibbar sein. Die wenigstens eine Schneckenwelle kann durch den Motor drehantreibbar sein oder drehangetrieben sein oder werden. Der Extruder kann wenigstens eine Antriebswelle aufweisen. Die wenigstens eine Antriebswelle kann mit der wenigstens einen Schneckenwelle gekoppelt sein oder werden. Der Extruder kann einen Frequenzumrichter aufweisen. Der Frequenzumrichter kann mit dem Motor gekoppelt sein. Der Extruder kann zumindest eine Messeinrichtung zur Erfassung eines, beispielsweise anliegenden, Drehmoments aufweisen. Die zumindest eine Messeinrichtung kann hierfür eine entsprechende Sensorik aufweisen. Das Drehmoment kann das Drehmoment der zumindest einen Antriebswelle oder der zumindest einen Schneckenwelle sein. Mittels der zumindest einen Messeinrichtung kann das Drehmoment abgetastet bzw. gemessen werden. Beispielsweise kann die zumindest eine Messeinrichtung das Drehmoment von nur einer Antriebs- oder Schneckenwelle abtasten bzw. messen. Alternativ kann die zumindest eine Messeinrichtung das Drehmoment von zwei oder allen Antriebs- oder Schneckenwellen abtasten bzw. messen. Jeder Antriebswelle oder jeder Schneckenwelle kann auch eine Messeinrichtung zugeordnet sein. Zusätzlich oder alternativ kann die zumindest eine Messeinrichtung das Drehmoment des Antriebsstrangs und/oder an einer Kupplung oder Kupplungshülse erfassen.

Das Verfahren kann den Schritt aufweisen: Erfassen eines Drehmomentsignals. Das Drehmomentsignal kann der zumindest einen Antriebswelle oder der zumindest einen Schneckenwelle und/oder der Kupplung / Kupplungshülse und/der dem Antriebsstrang zugeordnet sein. Das Drehmomentsignal kann als Signal vom Frequenzumrichter bereitgestellt sein oder werden. Das Drehmomentsignal kann als Messsignal von der zumindest einen Antriebswelle oder der zumindest einen Schneckenwelle bereitgestellt sein oder werden. Das Drehmomentsignal kann von der zumindest einen Messeinrichtung zum Erfassen des Drehmoments bereitstellt sein oder werden. Das Drehmomentsignal kann fortlaufend erfasst und/oder bereitgestellt sein oder werden. Das Drehmomentsignal kann sich aus mehreren Drehmomentsignalen zusammengesetzt, z.B. summiert, sein oder werden, beispielsweise aus einem ersten Drehmomentsignal einer ersten Antriebs- oder Schneckenwelle und einem zweiten Drehmomentsignal einer zweiten Antriebs- oder Schneckenwelle.

Das Verfahren kann den Schritt aufweisen: Erfassen von maximalen Peaks des, insbesondere erfassten, Drehmomentsignals. Maximale Peaks können, insbesondere maximale und/oder signifikante, Spitzenwerte sein. Es kann auch vorgehen sein, dass zumindest ein maximaler Peak des Drehmomentsignals erfasst wird. Es kann eine Analyse des erfassten Drehmomentsignals hinsichtlich maximaler Peaks, insbesondere über ein definiertes Zeitintervall, erfolgen.

Das Verfahren kann den Schritt aufweisen: Vergleichen der erfassten maximalen Peaks des Drehmomentsignals mit einem vorgegebenen Maximalwert für das Drehmoment. Es kann auch vorgesehen sein, dass der zumindest eine maximale Peak des Drehmomentsignals mit dem vorgegebenen Maximalwert für das Drehmoment verglichen wird. Der Maximalwert für das Drehmoment kann ein maximal zulässiges Drehmoment sein. Der Maximalwert für das Drehmoment kann ein eingestellter und/oder berechneter Maximalwert sein. Beispielsweise kann der Maximalwert für das Drehmoment, insbesondere durch eine Steuerung, wie Extrudersteuerung, eingestellt, definiert und/oder berechnet sein oder werden. Das Einstellen, Definieren und/oder Berechnen des Maximalwerts für das Drehmoment kann automatisch erfolgen. Der Maximalwert für das Drehmoment kann basierend auf zumindest einem Prozesssignal und/oder Prozessparameter eingestellt, definiert, berechnet und/oder entsprechend begrenzt sein oder werden. Ein Prozesssignal und/oder Prozessparameter kann beispielsweise ein Austragsdruck oder eine Temperatur, wie Materialtemperatur oder Gehäusetemperatur, sein. Zusätzlich oder alternativ kann der Maximalwert für das Drehmoment rezepturabhängig sein bzw. rezepturabhängig eingestellt, definiert, berechnet und/oder begrenzt sein oder werden. Zusätzlich oder alternativ können andere Werte, wie Grenzwerte, für Prozessparameter rezepturabhängig sein bzw. rezepturabhängig eingestellt, definiert, berechnet und/oder begrenzt sein oder werden. Der Maximalwert für das Drehmoment kann ein Wert unterhalb eines Abschaltwertes, wie Notabschaltwertes, sein. Beispielsweise kann der Maximalwert für das Drehmoment etwa 5% unterhalb des Abschaltwertes liegen.

Das Verfahren kann den Schritt aufweisen: Anpassen des Drehmoments der zumindest einen Schneckenwelle basierend auf dem Ergebnis des Vergleichs. Das Anpassen des Drehmoments der zumindest einen Schneckenwelle kann automatisch, oder halbautomatisch oder manuell erfolgen. Das automatische oder halbautomatische Anpassen des Drehmoments kann durch eine Steuerung, wie Extrudersteuerung, erfolgen. Zusätzlich oder alternativ kann auch eine Information oder ein Signal ausgegeben werden, sodass ein Anlagenbediener das Drehmoment manuell, beispielsweise durch Einstellen bzw. Veränderung bestimmter Prozessparameter, anpassen kann. Die ausgegebene Information bzw. das Signal kann eine Handlungsempfehlung für den Anlagenbediener sein.

Unter Anpassen kann eine Verringerung oder Erhöhung des Drehmoments der Schneckenwelle verstanden werden. Das Drehmoment der zumindest einen Schneckenwelle kann erhöht werden, wenn die erfassten maximalen Peaks des Drehmoments unterhalb des vorgegebenen Maximalwerts für das Drehmoment liegen. Das Drehmoment der Schneckenwelle kann mittels Durchsatzerhöhung und/oder Drehzahlverringerung erhöht werden. Unter Durchsatzerhöhung kann die Zugabe bzw. eine erhöhte Zugabe von Material, wie Kunststoffmaterial und/oder Additivstoffen, verstanden werden. Unter Drehzahlverringerung kann die Verringerung der Drehzahl der zumindest einen Schneckenwelle und/oder der zumindest einen Antriebswelle verstanden werden. Das Drehmoment der zumindest einen Schneckenwelle kann verringert werden, wenn die erfassten maximalen Peaks des Drehmoments den vorgegebenen Maximalwert für das Drehmoment erreichen oder überschreiten. Das Drehmoment der Schneckenwelle kann mittels Durchsatzverringerung und/oder Drehzahlerhöhung verringert werden. Unter Durchsatzverringerung kann reduzierte Zugabe von Material, wie Kunststoffmaterial und/oder Additivstoffen, verstanden werden. Unter Drehzahlerhöhung kann die Erhöhung der Drehzahl der zumindest einen Schneckenwelle und/oder der zumindest einen Antriebswelle verstanden werden. Es kann auf die Materialzudosierung und/oder die Drehzahl der zumindest einen Antriebswelle und/oder Schneckenwelle eingewirkt werden, beispielsweise wenn die erfassten maximalen Peaks des Drehmoments unterhalb und/oder oberhalb des vorgegebenen Maximalwerts für das Drehmoment liegen.

Bei dem Verfahren kann ein Drehmoment-Referenzwert bereitgestellt oder vorgegeben sein oder werden. Der Drehmoment-Referenzwert kann zuvor definiert oder berechnet sein oder werden. Der Drehmoment-Referenzwert kann eine Basisline sein oder definieren. Es kann ein Zeitintervall definiert sein oder werden. Der Drehmoment-Referenzwert kann für ein definiertes Zeitintervall fortlaufend im Betrieb des Extruders und/oder basierend auf historischen Daten berechnet sein oder werden. Die historischen Daten können bei vergleichbaren Bedingungen, wie Rezeptur, Schneckenkonfiguration, etc., ermittelt worden sein. Es kann eine Schwankungsbreite um den Drehmoment-Referenzwert analysiert und/oder ermittelt werden. Die Schwankungsbreite kann eine Schwankungsbreite des Drehmoments bzw. Drehmomentsignals sein. Die Schwankungsbreite kann in dem definierten Zeitintervall analysiert und/oder ermittelt werden. Es kann eine Standard-Schwankungsbreite des Drehmoments bzw. Drehmomentsignals basierend auf bestehenden oder erfassten Daten, beispielsweise bei entsprechenden Betriebspunkten des Extruders, Rezepturen oder Prozessen, definiert sein oder werden. Es kann ein Anlernen mit den bestehenden oder erfassten Daten erfolgen, beispielsweise um die Standard-Schwankungsbreite bei entsprechenden Betriebspunkten, rezepturabhängig und/oder prozessabhängig (z.B. Schneckenkonfiguration, Seitenbeschickung und/oder Entgasung, etc.) zu definieren. Die maximalen Peaks des Drehmomentsignals können basierend auf der Analyse der Schwankungsbreite und/oder Standard-Schwankungsbreite erfasst und/oder bestimmt werden.

Es kann ein Medianwert oder Mittelwert des Drehmoments bzw. Drehmomentsignals für ein definiertes Zeitintervall berechnet werden. Dies kann basierend auf dem erfassten Drehmomentsignal und/oder rückblickend auf ein bestimmtes Zeitintervall, insbesondere in der Vergangenheit, wie unmittelbare Vergangenheit, erfolgen. Das Berechnen des Medianwertes oder Mittelwertes des Drehmoments bzw. Drehmomentsignals für ein definiertes Zeitintervall fortlaufend im Betrieb des Extruders und/oder basierend auf historischen Daten erfolgt. Der Drehmoment-Referenzwert kann der berechnete Medianwert oder Mittelwert sein. Die Schwankungsbreite kann in dem definierten Zeitintervall um den errechneten Medianwert oder Mittelwert analysiert und/oder ermittelt werden. Durch die Einbeziehung des Medianwerts oder Mittelwerts kann eine zuverlässigere Berechnung und/oder Analyse erfolgen. Damit kann eine genauere Durchsatzanpassung und/oder Drehzahlanpassung erfolgen.

Nach jeder Anpassung des Drehmoments der zumindest einen Schneckenwelle können die Schritte, wie Erfassen des Drehmomentsignals, Erfassen von maximalen Peaks des Drehmomentsignals, Vergleichen der erfassten maximalen Peaks des Drehmomentsignals mit dem vorgegeben Maximalwert für das Drehmoment und Anpassen des Drehmoments der zumindest einen Schneckenwelle basierend auf dem Ergebnis des Vergleichs, solange wiederholt durchgeführt werden, insbesondere bis die jeweils erfassten maximalen Peaks des Drehmoments den vorgegebenen Maximalwert für das Drehmoment erreicht bzw. im Wesentlichen erreicht haben. Diese Schritte können auch nach jeder Durchsatzerhöhung und/oder Drehzahlverringerung solange wiederholt durchgeführt werden, bis die jeweils erfassten maximalen Peaks des Drehmoments den vorgegebenen Maximalwert für das Drehmoment erreicht bzw. im Wesentlichen erreicht haben.

Bei dem Verfahren kann ein das Drehmoment beeinflussender Vorgang und/oder ein diesem Vorgang zugeordnetes Prozesssignal erkannt und/oder erfasst werden. Eine zuvor geplante oder aktuell durchgeführte Anpassung des Drehmoments der zumindest einen Schneckenwelle kann zumindest temporär gestoppt werden, wenn ein das Drehmoment beeinflussender Vorgang und/oder ein diesem Vorgang zugeordnetes Prozesssignal erkannt bzw. erfasst wurde. Es kann eine temporäre bzw. kurzzeitige Anpassung des Drehmoments der zumindest einen Schneckenwelle erfolgen, beispielsweise dann, wenn ein das Drehmoment beeinflussender Vorgang und/oder ein diesem Vorgang zugeordnetes Prozesssignal erkannt bzw. erfasst wurde. Unter einem das Drehmoment beeinflussenden Vorgang kann beispielsweise eine Materialtemperaturänderung, beispielsweise in der Zuführung, eine Materialzuführung, eine Nachfüllung oder eine Dosierung verstanden werden. Unter Materialtemperaturänderung kann eine Materialtemperaturerhöhung oder eine Materialtemperaturverringerung verstanden werden. Unter einer temporären bzw. kurzzeitigen Anpassung kann eine temporäre bzw. kurzzeitige Verringerung oder Erhöhung des Drehmoments der zumindest einen Schneckenwelle verstanden werden. Nach Beendigung des das Drehmoment beeinflussenden Vorgangs kann das Drehmoment der zumindest einen Schneckenwelle wieder auf den zuvor vorhanden Wert, wie Ursprungswert oder Anfangswert, eingestellt werden. Es können Prozesssignale genutzt werden, um den Prozess gezielt kurzfristig zu beeinflussen, insbesondere um die Drehmomentpeaks zu reduzieren. Dadurch können vorhersehbare Kurzzeiteffekte nicht zu einer Überschreitung des zulässigen Drehmomentsignals bzw. Maximalwerts führen. Beispielsweise kann während der Nachfüllung einer Dosierung die Drehzahl der zumindest einen Schneckenwelle kurzfristig angepasst werden, um einen Peak der zum Überschreiten des maximal zulässigen Drehmomentsignals bzw. Maximalwerts führen würde, zu vermeiden.

Bei dem Verfahren kann die Anpassung des Drehmoments der zumindest einen Schneckenwelle gestoppt werden, wenn die maximalen Peaks des Drehmoments den vorgegebenen Maximalwert für das Drehmoment erreicht bzw. im Wesentlichen erreicht haben. Im Betrieb des Extruders kann die Schwankungsbreite fortlaufend analysiert werden und/oder das Drehmoment der zumindest einen Schneckenwelle bedarfsweise, beispielsweise mittels Durchsatzerhöhung oder Durchsatzverringerung und/oder Drehzahlerhöhung oder Drehzahlverringerung, angepasst werden.

Das Erfassen des Drehmomentsignals und/oder das Anpassen des Drehmoments der zumindest einen Schneckenwelle kann in Echtzeit erfolgen. Das Drehmomentsignal und/oder die Prozesssignale und/oder Daten kann/können in Echtzeit, beispielsweise mit einer Steuerung, wie Extrudersteuerung, verarbeitet werden.

Ein Computerprogramm kann ein Computerprogrammprodukt sein. Das Computerprogramm kann eine Computerprogrammkomponente sein oder zumindest eine Computerprogrammkomponente aufweisen. Das Computerprogramm kann eine Steuerung, wie Extrudersteuerung, und/oder Steuer- und/oder Recheneinheit/gerät, ein Steuerungssystem und/oder einen Extruder und/oder einen Prozessor oder einen Computer dazu veranlassen, das vorstehend und/oder nachfolgend beschriebene Verfahren auszuführen. Hierzu kann das Computerprogramm entsprechende Datensätze und/oder Programmcodemittel und/oder ein Speichermedium zum Speichern der Datensätze bzw. des Programms aufweisen. Das Computerprogramm oder Computerprogrammkomponente kann auf einem computerlesbaren Medium, wie Speichermedium, gespeichert sein.

Das Computerprogramm kann Programmcodemittel und/oder Befehle umfassen, um bei einem Ausführen des Computerprogramms auf zumindest einem Prozessor das vorstehend und/oder nachfolgend beschriebene Verfahren durchzuführen. Das Computerprogramm / die Computerprogrammkomponente kann Programmcodemittel und/oder Befehle umfassen, um bei einem Ausführen des Computerprogramms auf zumindest einem Prozessor zumindest einen der Schritte des vorstehend und/oder nachfolgend beschriebenen Verfahrens durchzuführen oder die bewirken, dass eine Steuerung, wie Extrudersteuerung, oder ein Extruder, zumindest einen der Schritte des vorstehend und/oder nachfolgend beschriebenen Verfahrens ausführt.

Beispielsweise kann das Computerprogramm oder ein erstes Computerprogramm / eine erste Computerprogrammkomponente Programmcodemittel und/oder Befehle umfassen, um bei einem Ausführen des Computerprogramms / der Computerprogrammkomponente auf zumindest einem ersten Prozessor oder Computer die Schritte Erfassen des Drehmomentsignals, Erfassen von maximalen Peaks des Drehmomentsignals, und Vergleichen der erfassten maximalen Peaks des Drehmomentsignals mit dem vorgegeben Maximalwert für das Drehmoment des vorstehend und/oder nachfolgend beschriebenen Verfahrens durchzuführen, oder die bewirken, dass eine Steuerung, wie Extrudersteuerung, oder ein Extruder, diese Schritte ausführt. Das erste Computerprogramm / die erste Computerprogrammkomponente kann Programmcodemittel und/oder Befehle umfassen, um bei einem Ausführen des Computerprogramms / der Computerprogrammkomponente auf dem zumindest einem ersten Prozessor und/oder Computer, diesen zu veranlassen, Daten an einen zweiten Prozessor und/oder Computer zu senden und/oder von diesem zu empfangen.

Zusätzlich oder alternativ kann das Computerprogramm oder das erste Computerprogramm / Computerprogrammkomponente Programmcodemittel und/oder Befehle umfassen, um bei einem Ausführen des Computerprogramms / der Computerprogrammkomponente auf zumindest einem ersten Prozessor oder Computer historische Daten und/oder Signale auszuwerten. Unter historischen Daten und/oder Signale können Daten bzw. Signale verstanden werden, die zuvor bei vergleichbaren Betriebspunkten, Prozessen und/oder Rezepturen erfasst worden sind.

Das Computerprogramm oder ein zweites Computerprogramm / eine zweite Computerprogrammkomponente kann Programmcodemittel und/oder Befehle umfassen, um bei einem Ausführen des Computerprogramms / der Computerprogrammkomponente auf zumindest einem zweiten Prozessor und/oder Computer den Schritt des Anpassens des Drehmoments der zumindest einen Schneckenwelle basierend auf dem Ergebnis des Vergleichs des vorstehend und/oder nachfolgend beschriebenen Verfahrens durchzuführen, oder die bewirken, dass eine Steuerung, wie Extrudersteuerung, oder ein Extruder, diesen Schritt ausführt. Das zweite Computerprogramm / die zweite Computerprogrammkomponente kann Programmcodemittel und/oder Befehle umfassen, um bei einem Ausführen des Computerprogramms / der Computerprogrammkomponente auf dem zumindest einem zweiten Prozessor und/oder Computer, diesen zu veranlassen, Daten an den ersten Prozessor und/oder Computer zu senden und/oder von diesem zu empfangen.

Zusätzlich oder alternativ kann das Computerprogramm oder das erste und/oder zweite Computerprogramm / Computerprogrammkomponente Programmcodemittel und/oder Befehle umfassen, um bei einem Ausführen des Computerprogramms / der Computerprogrammkomponente auf zumindest einem ersten Prozessor oder Computer aktuelle Daten und/oder Signale auszuwerten, beispielsweise in Echtzeit.

Es kann eine verteilte Computerumgebung / Prozessorumgebung verwirklicht sein. Beispielsweise kann ein vernetztes Client-Server-System, Peer-to-Peer-Netz und/oder eine Cloud, wie Computercloud, vorgesehen sein. Teile des Computerprogramms können sowohl zentral oder dezentral vorgesehen sein. Beispielsweise kann das zweite Computerprogramm / die zweite Computerprogrammkomponente mittels einer Steuerung, wie Extrudersteuerung, ausgeführt werden. Das erste Computerprogramm / die erste Computerprogrammkomponente kann mittels einer Steuerung, wie Extrudersteuerung, ausgeführt werden und/oder mittels einer externen Auswerteeinheit ausgeführt werden oder mittels einer Computercloud bzw. in einer Cloud ausgeführt werden. Die externe Auswerteeinheit kann mit der Steuerung verbunden sein. Die Steuerung, wie Extrudersteuerung, kann mit der Cloud bzw. Computercloud verbunden sein, beispielsweise drahtgebunden oder drahtlos. Hierfür kann die Steuerung eine entsprechende Sende- und/oder Empfangseinrichtung aufweisen.

Eine Steuerung für einen Extruder kann eine Extrudersteuerung sein. Die Steuerung kann ein Steuergerät sein. Die Steuerung kann zum Einsatz in einem Extruder oder Extruderanlage eingerichtet und/oder bestimmt sein. Die Steuerung kann dazu eingerichtet und/oder bestimmt sein, das vorstehend und/oder nachfolgend beschriebene Verfahren auszuführen. Die Steuerung kann wenigstens einen Prozessor und/oder Computer, wie Mikrocomputer, und/oder das Computerprogramm und/oder zumindest eine Computerprogrammkomponente aufweisen. Die Steuerung kann einen computerlesbaren Speicher, wie Speichermedium, aufweisen. Das Computerprogramm bzw. die Computerprogrammkomponente kann in dem Speicher gespeichert sein. Die Steuerung kann eine Sende- und/oder Empfangseinrichtung aufweisen. Die Steuerung kann zum Verbinden mit einem externen Speichermedium oder externen Prozessor oder Computer und/oder Cloud, wie Computercloud, ausgebildet und/oder eingerichtet sein. Die Steuerung kann zumindest eine Messeinrichtung zur Erfassung des Drehmoments der zumindest einen Schneckenwelle und/oder der zumindest einen Antriebswelle aufweisen oder mit dieser verbunden sein. Die Steuerung kann einen Frequenzumrichter aufweisen oder mit diesem verbunden sein. Die Steuerung kann ausgebildet und/oder eingerichtet sein, mit der zumindest einen Messeinrichtung und/oder mit dem Frequenzumrichter zu kommunizieren und/oder Daten, wie Signale, auszutauschen.

Ein Extruder zur Verarbeitung von Material, wie Kunststoffmaterial, ausgebildet sein. Der Extruder kann einen Zylinder, wie Extruderzylinder, aufweisen. Der Extruder kann wenigstens eine Schneckenwelle, wie Extruderschnecke, aufweisen. Die wenigstens eine Schneckenwelle kann in dem Zylinder drehbar aufgenommen sein. Die wenigstens eine Schneckenwelle kann drehantreibbar sein. Beispielsweise kann der Extruder zwei Schneckenwellen aufweisen. Der Extruder kann ein Einschneckenextruder, Mehrwellenextruder oder Doppelschneckenextruder sein. Der Extruder kann einen Motor aufweisen. Die wenigstens eine Schneckenwelle kann durch den Motor drehantreibbar sein oder drehangetrieben sein oder werden. Der Extruder kann wenigstens eine Antriebswelle aufweisen. Die wenigstens eine Antriebswelle kann mit der wenigstens einen Schneckenwelle gekoppelt sein oder werden. Der Extruder kann einen Frequenzumrichter aufweisen. Der Frequenzumrichter kann mit dem Motor gekoppelt sein. Der Extruder kann zumindest eine Messeinrichtung zur Erfassung eines Drehmoments der zumindest einen Schneckenwelle oder der zumindest einen Antriebswelle aufweisen. Die zumindest eine Messeinrichtung kann hierfür eine entsprechende Sensorik aufweisen. Die zumindest eine Messeinrichtung kann ausgebildet sein, das Drehmoment abzutasten bzw. zu messen. Beispielsweise kann die zumindest eine Messeinrichtung ausgebildet sein, das Drehmoment von nur einer Antriebs- oder Schneckenwelle abzutasten bzw. zu messen. Alternativ kann die zumindest eine Messeinrichtung ausgebildet sein das Drehmoment von zwei oder allen Antriebs- oder Schneckenwellen abzutasten bzw. zu messen. Jeder Antriebswelle oder jeder Schneckenwelle kann eine Messeinrichtung zugeordnet sein. Zusätzlich oder alternativ kann die zumindest eine Messeinrichtung ausgebildet sein, das Drehmoment des Antriebsstrangs und/oder an einer Kupplung oder Kupplungshülse zu erfassen. Der Extruder kann dazu eingerichtet und/oder bestimmt sein, das vorstehend und/oder nachfolgend beschriebene Verfahren auszuführen. Der Extruder kann eine Steuerung, wie Extrudersteuerung, aufweisen. Die Steuerung kann wie vorstehend und/oder nachfolgend beschrieben ausgebildet sein. Die Steuerung kann ausgebildet und/oder eingerichtet sein, mit der zumindest einen Messeinrichtung und/oder mit dem Frequenzumrichter zu kommunizieren und/oder Daten, wie Signale, auszutauschen.

Zusammenfassend und mit anderen Worten dargestellt ergibt sich somit durch die Erfindung unter anderem ein Algorithmus, wie Verfahren, zur Auswertung von bestehenden bzw. erfassten Signalen, beispielsweise Prozesssignale für Drehmoment, Drehzahl, Druck, Temperatur, und/oder Durchsatz, etc., des Extruders, z.B. Doppelschneckenextruders. Es kann dann eine daraus folgende Anpassung des Betriebspunktes, beispielsweise Anpassung der Drehzahl, Durchsatz und/oder Gehäusetemperierung, etc., hin zu einem höheren Drehmoment erfolgen. Der Algorithmus kann mit bestehenden Daten aus der Anlage angelernt werden, beispielsweise um eine Standard-Schwankungsbreite bei entsprechenden Betriebspunkten, rezepturabhängig und/oder prozessabhängig (Schneckenkonfiguration, Seitenbeschickungen, Entgasungen, etc.) zu definieren. Der Algorithmus kann den Medianwert oder Mittelwert, beispielsweise als eine Basislinie, des Drehmomentsignals fortlaufend im Betrieb des Extruders rückblickend auf ein bestimmtes Zeitintervall in der Vergangenheit bilden bzw. ermitteln. Der Algorithmus kann historische Daten für die Berechnung heranziehen, beispielsweise dann, falls diese unter vergleichbaren Bedingungen (Rezeptur, Schneckenkonfiguration, etc.) entstanden sind. In dem Zeitintervall kann die Schwankungsbreite um den Medianwert bzw. Mittelwert (z.B. die Basislinie) analysiert werden, um die maximalen Peaks des Drehmomentsignals zu erfassen. Liegen diese Peaks unterhalb eines eingestellten Maximalwertes für das maximal zulässige Drehmoment kann der Algorithmus den Durchsatz des Extruders automatisch oder halbautomatisch oder mit einer erforderlichen Benutzereingabe steigern, beispielsweise in sehr kleinen Schritten von z.B. etwa 1% des Gesamtdurchsatzes oder nach einem definierten Berechnungsmodell. Die Durchsatzsteigerung kann linear oder nicht-linear erfolgen. Basis der Durchsatzsteigerung kann die Abhängigkeit der Prozesseinflussgrößen auf das Drehmoment, beispielsweise ermittelt durch den Algorithmus, sein. Ein vorgegebener, z.B. eingestellter, Maximalwert muss nicht der Wert für die Notabschaltung des Extruders sein, sondern ein Wert mit einer gewissen Sicherheit unterhalb des Abschaltwertes, z.B. etwa 5% unterhalb. Nach jeder Durchsatzanpassung kann erneut eine Auswertung der Messsignale, des Medianwertes bzw. Mittelwertes / Basisline, der Schwankungsbreite des Messsignals, und/oder der auftretenden Peaks etc. erfolgen. Auf Basis der neuen Erkenntnisse kann eine erneute Anpassung der Prozessparameter, wie des Drehmoments, erfolgen. Dadurch kann sich der Medianwert bzw. Mittelwerk (wie die Basislinie) des Drehmoment-signals, z.B. stetig, erhöhen, bis die maximalen Peaks des Drehmomentsignals den zulässigen bzw. vorgegeben Maximalwert erreichen. Dann kann die Durchsatzsteigerung gestoppt werden. Der Algorithmus kann weiterhin im Betrieb die Schwankungsbreite des Drehmomentsignals analysieren und/oder den Durchsatz bei Bedarf anpassen. Erhöht sich die Schwankungsbreite im Prozess kann der Durchsatz z.B. verringert werden, um die Gefahr einer Notabschaltung zu umgehen. Die Schritte zur Verringerung des Durchsatzes können analog der zur Steigerung des Durchsatzes und/oder auf Basis von historischen Daten oder eines mathematischen Berechnungsmodells erfolgen. In manchen Prozessen kann der maximale Durchsatz durch Peripheriegeräte, wie z.B. durch Dosier- oder Austragsaggregate, limitiert sein oder werden. Eine Durchsatzsteigerung zur Optimierung des Drehmoments kann somit nicht immer zu jedem Zeitpunkt möglich sein. Alternativ zur Durchsatzsteigerung könnte auch die Drehzahl des Extruders bzw. der Schneckenwelle/n bei gleichbleibendem Durchsatz abgesenkt werden, um das Drehmoment zu erhöhen und/oder maximal auszureizen. Dies kann eine Absenkung des spezifischen Energieeintrags zur Folge haben. Vor allem für Extruder im Großmaschinenbereich kann das eine deutliche Kosteneinsparung pro kg produziertes Produkt bedeuten. Um den Algorithmus effizienter, robuster und/oder vorausschauender auszubilden, können in die Analyse weitere Signale aus der Prozesskette, wie zum Beispiel Signale aus der Dosieranlage, integriert sein oder werden. Dadurch können potenzielle Einflüsse auf das Drehmomentsignal bereits vor deren Auswirkung erkannt und/oder der Betriebspunkt entsprechend angepasst werden. Der Algorithmus kann auf der Steuerung, wie Extrudersteuerung, implementieren sein oder werden. Die Daten können in Echtzeit verarbeitet werden. Der Algorithmus kann somit Daten in Echtzeit und/oder mit einer höheren Auflösung nutzen. Zusätzlich oder alternativ kann eine kombinierte Berechnung vorgesehen sein, wobei historische Daten / Signal auf einer externen Auswerteeinheit oder einer Cloud ausgewertet werden und nur die aktuellen Daten / Signale und die Anpassung auf der Steuerung bzw. mittels der Steuerung erfasst und/oder berechnet bzw. ausgewertet werden.

Mit der Erfindung kann das Drehmoment optimiert werden. Es kann der Betriebspunkt an der Drehmomentgrenze optimiert werden. Die Produktivität kann damit gesteigert werden. Es kann das maximal zulässige Drehmoment und die damit einhergehende Durchsatzmaximierung, beispielsweise auf bestehenden Extrudern, in einem betriebssicheren Zustand ausgenutzt werden, beispielsweise automatisch bzw. halbautomatisch oder manuell. Einhergehend mit der Optimierung des Drehmoments, ob durch Durchsatzsteigerung oder Drehzahlabsenkung, ist in vielen Fällen eine bessere Produktqualität, da das Produkt schonender verarbeitet werden kann.

Nachfolgend werden Ausführungsbeispiele der Erfindung unter Bezugnahme auf Figuren näher beschrieben, dabei zeigen schematisch und beispielhaft:
- Fig. 1: ein Ablaufschema für eine Variante eines Verfahrens zum Betrieb eines Extruders;
- Fig. 2: ein Ablaufschema für eine weitere Variante eines Verfahrens zum Betrieb eines Extruders; und
- Fig. 3: einen Extruder mit einer Steuerung.

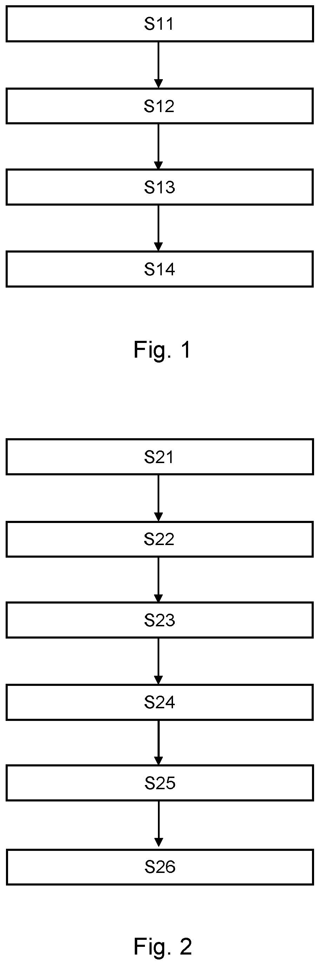

Fig. 1 zeigt schematisch ein Ablaufschema für eine Variante eines Verfahrens zum Betrieb eines Extruders. Der Extruder umfasst wenigstens eine in einem Zylinder drehbar aufgenommene und durch einen Motor drehantreibbare Schneckenwelle. Die zumindest eine Schneckenwelle ist mit zumindest einer Antriebswelle gekoppelt. Die zumindest eine Antriebswelle ist mit dem Motor gekoppelt.

In einem Schritt S11 wird ein Drehmomentsignal erfasst, welches mit der zumindest einen Antriebs- oder Schneckenwelle zugordnet ist. Das Drehmomentsignal entspricht somit dem Drehmoment der zumindest einen Antriebs- oder Schneckenwelle. Das Drehmomentsignal kann beispielsweise von einem Frequenzumrichter stammen oder von zumindest einer Messeinrichtung zum Erfassen des Drehmoments bereitgestellt sein oder werden.

In einem Schritt S12 werden maximale Peaks des Drehmomentsignals erfasst und in einem Schritt S13 werden die erfassten maximalen Peaks des Drehmomentsignals mit einem vorgegebenen Maximalwert für das Drehmoment verglichen.

In einem Schritt S14 wird das Drehmoment der zumindest einen Schneckenwelle basierend auf dem Ergebnis des Vergleichs angepasst. Das Anpassen des Drehmoments der zumindest einen Schneckenwelle kann automatisch, oder halbautomatisch oder manuell erfolgen. Dabei kann das Drehmoment der zumindest einen Schneckenwelle erhöht werden, wenn die erfassten maximalen Peaks des Drehmoments unterhalb des vorgegebenen Maximalwerts für das Drehmoment liegen. Das Drehmoment der zumindest einen Schneckenwelle kann mittels Durchsatzerhöhung und/oder Drehzahlverringerung erhöht werden. Nach jeder Anpassung des Drehmoments der zumindest einen Schneckenwelle bzw. nach jeder Durchsatzerhöhung und/oder Drehzahlverringerung können die Schritte S11 bis S14 solange wiederholt durchgeführt werden, bis die jeweils erfassten maximalen Peaks des Drehmoments den vorgegebenen Maximalwert für das Drehmoment erreicht bzw. im Wesentlichen erreicht haben. Die Anpassung des Drehmoments der zumindest einen Schneckenwelle kann dann gestoppt werden, wenn die maximalen Peaks des Drehmoments den vorgegebenen Maximalwert für das Drehmoment erreicht bzw. im Wesentlichen erreicht haben.

Fig. 2 zeigt schematisch ein Ablaufschema für eine weitere Variante eines Verfahrens zum Betrieb eines Extruders. Der Extruder umfasst wenigstens eine in einem Zylinder drehbar aufgenommene und durch einen Motor drehantreibbare Schneckenwelle. Die zumindest eine Schneckenwelle ist mit zumindest einer Antriebswelle gekoppelt. Die zumindest eine Antriebswelle ist mit dem Motor gekoppelt.

In einem Schritt S21 wird ein Drehmomentsignal erfasst, welches mit der zumindest einen Antriebs- oder Schneckenwelle zugordnet ist. Das Drehmomentsignal entspricht somit dem Drehmoment der zumindest einen Antriebs- oder Schneckenwelle. Das Drehmomentsignal kann beispielsweise von einem Frequenzumrichter stammen oder von zumindest einer Messeinrichtung zum Erfassen des Drehmoments bereitgestellt sein oder werden.

In einem Schritt S22 wird ein Drehmoment-Referenzwert bereitgestellt. Dabei kann ein Medianwert oder Mittelwert des erfassten Drehmoments bzw. Drehmomentsignals für ein definiertes Zeitintervall berechnet werden. Der Drehmoment-Referenzwert ist dann der berechnete Medianwert oder Mittelwert.

In einem Schritt S23 wird eine Schwankungsbreite um den Drehmoment-Referenzwert analysiert und in einem Schritt S24 werden maximale Peaks des Drehmomentsignals basierend auf der Analyse der Schwankungsbreite erfasst.

In einem Schritt S25 werden dann die erfassten maximalen Peaks des Drehmomentsignals mit einem vorgegebenen Maximalwert für das Drehmoment verglichen.

In einem Schritt S26 wird das Drehmoment der zumindest einen Schneckenwelle basierend auf dem Ergebnis des Vergleichs angepasst. Das Anpassen des Drehmoments der zumindest einen Schneckenwelle kann automatisch, oder halbautomatisch oder manuell erfolgen. Dabei kann das Drehmoment der zumindest einen Schneckenwelle erhöht werden, wenn die erfassten maximalen Peaks des Drehmoments unterhalb des vorgegebenen Maximalwerts für das Drehmoment liegen. Das Drehmoment der zumindest einen Schneckenwelle kann mittels Durchsatzerhöhung und/oder Drehzahlverringerung erhöht werden. Nach jeder Anpassung des Drehmoments der zumindest einen Schneckenwelle bzw. nach jeder Durchsatzerhöhung und/oder Drehzahlverringerung können die Schritte S21 bis S26 solange wiederholt durchgeführt werden, bis die jeweils erfassten maximalen Peaks des Drehmoments den vorgegebenen Maximalwert für das Drehmoment erreicht bzw. im Wesentlichen erreicht haben. Die Anpassung des Drehmoments der zumindest einen Schneckenwelle kann dann gestoppt werden, wenn die maximalen Peaks des Drehmoments den vorgegebenen Maximalwert für das Drehmoment erreicht bzw. im Wesentlichen erreicht haben.

Im Übrigen wird ergänzend insbesondere auf Fig. 1 und die zugehörige Beschreibung verwiesen.

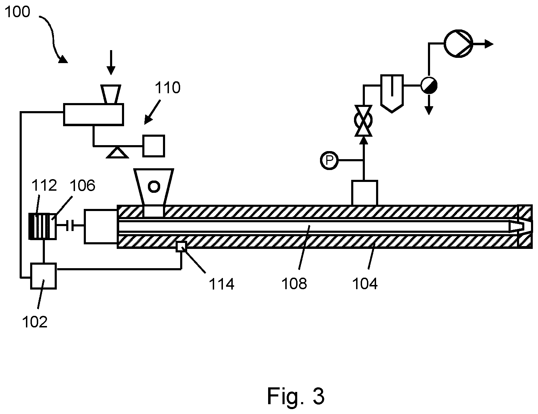

Fig. 3 zeigt schematisch einen Extruder 100 mit einer Steuerung 102. Der Extruder umfasst eine Zylinder 104 und wenigstens eine in dem Zylinder 104 drehbar aufgenommene und durch einen Motor 106 drehantreibbare Schneckenwelle 108. Die zumindest eine Schneckenwelle 108 ist mit zumindest einer Antriebswelle gekoppelt, welche mit dem Motor 106 gekoppelt ist. Im vorliegenden Ausführungsbeispiel ist der Extruder als Doppelschneckenextruder ausgebildet und weist zwei drehantreibbare Schneckenwellen 108 auf, die in dem Zylinder 104 drehbar aufgenommen sind. Ferner ist eine Materialzudosierung 110 vorgesehen, um dem Extruder bzw. den Schneckenwellen 108 Material, z.B. Kunststoffmaterial, zuzuführen.

Die Steuerung kann mit einem Frequenzumrichter 112 und/oder einer Messeinrichtung 114 verbunden sein bzw. mit diesen kommunizieren und damit Daten bzw. Signale austauschen. Der Frequenzumrichter 112 kann ein zumindest einer Antriebswelle bzw. Schneckenwelle 108 zugeordnetes Drehmomentsignal der Steuerung 102 bereitstellen. Die Messeinrichtung 114 ist dazu ausgebildet, ein Drehmoment von zumindest einer oder beiden Schneckenwellen 108 zu erfassen bzw. zu messen und das zugehörige Drehmomentsignal der Steuerung 102 bereitzustellen. Die Steuerung 102 und/oder der Extruder 100 ist dazu ausgebildet und/oder bestimmt, das vorstehend und/oder nachfolgend beschriebene Verfahren auszuführen.

Im Übrigen wird ergänzend insbesondere auf Fign. 1 und 2 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- S11: Schritt zum Erfassen eines Drehmomentsignals
- S12: Schritt zum Erfassen von maximalen Peaks des Drehmomentsignals
- S13: Schritt zum Vergleichen der maximalen Peaks des Drehmomentsignals mit einem vorgegebenen Maximalwert für das Drehmoment
- S14: Schritt zum Anpassen des Drehmoments der zumindest einen Schneckenwelle
- S21: Schritt zum Erfassen eines Drehmomentsignals
- S22: Schritt zum Bereitstellen eines Drehmoment-Referenzwerts
- S23: Schritt zum Analysieren einer Schwankungsbreite um den Drehmoment-Referenzwert
- S24: Schritt zum Erfassen von maximalen Peaks des Drehmomentsignals
- S25: Schritt zum Vergleichen der maximalen Peaks des Drehmomentsignals mit einem vorgegebenen Maximalwert für das Drehmoment
- S26: Schritt zum Anpassen des Drehmoments der zumindest einen Schneckenwelle
- 100: Extruder
- 102: Steuerung
- 104: Zylinder
- 106: Motor
- 108: Schneckenwelle
- 110: Materialzudosierung
- 112: Frequenzumrichter
- 114: Messeinrichtung

## Patentansprüche

1. Verfahren zum Betrieb eines Extruders (100) umfassend wenigstens eine in einem Zylinder (104) drehbar aufgenommene und durch einen Motor (106) drehantreibbare Schneckenwelle (108), mit den Schritten:
- Erfassen (S11, S21) eines Drehmomentsignals, welches zumindest einer Antriebs- oder Schneckenwelle (108) zugeordnet ist;
- Erfassen (S12, S24) von maximalen Peaks des Drehmomentsignals;
- Vergleichen (S13, S25) der erfassten maximalen Peaks des Drehmomentsignals mit einem vorgegebenen Maximalwert für das Drehmoment; und
- Anpassen (S14, S26) des Drehmoments der zumindest einen Schneckenwelle (108) basierend auf dem Ergebnis des Vergleichs.

2. Verfahren nach Anspruch 1, **dadurch gekennzeichnet, dass** das Drehmoment der zumindest einen Schneckenwelle (108) erhöht wird, wenn die erfassten maximalen Peaks des Drehmoments unterhalb des vorgegebenen Maximalwerts für das Drehmoment liegen.

3. Verfahren nach wenigstens einem der vorhergehenden Ansprüche, **dadurch gekennzeichnet, dass** das Drehmoment der zumindest einen Schneckenwelle (108) mittels Durchsatzerhöhung und/oder Drehzahlverringerung erhöht wird, oder dass das Drehmoment der zumindest einen Schneckenwelle (108) mittels Durchsatzverringerung und/oder Drehzahlerhöhung verringert wird.

4. Verfahren nach wenigstens einem der vorhergehenden Ansprüche, **dadurch gekennzeichnet, dass** ein Drehmoment-Referenzwert bereitgestellt (S22), eine Schwankungsbreite um den Drehmoment-Referenzwert analysiert (S23) und die maximalen Peaks des Drehmomentsignals basierend auf der Analyse der Schwankungsbreite erfasst werden (S24).

5. Verfahren nach Anspruch 4, **dadurch gekennzeichnet, dass** ein Medianwert oder Mittelwert des Drehmoments bzw. Drehmomentsignals für ein definiertes Zeitintervall berechnet wird und der Drehmoment-Referenzwert der berechnete Medianwert oder Mittelwert ist.

6. Verfahren nach Anspruch 5, **dadurch gekennzeichnet, dass** das Berechnen des Medianwertes oder Mittelwertes des Drehmoments bzw. Drehmomentsignals für ein definiertes Zeitintervall fortlaufend im Betrieb des Extruders (100) und/oder basierend auf historischen Daten erfolgt.

7. Verfahren nach wenigstens einem der vorhergehenden Ansprüche, **dadurch gekennzeichnet, dass** der vorgegebene Maximalwert für das Drehmoment basierend auf zumindest einem Prozesssignal bzw. Prozessparameter und/oder rezepturabhängig eingestellt, definiert, berechnet und/oder begrenzt ist oder wird.

8. Verfahren nach wenigstens einem der vorhergehenden Ansprüche, **dadurch gekennzeichnet, dass** nach jeder Anpassung des Drehmoments der zumindest einen Schneckenwelle (108) die Schritte solange wiederholt durchgeführt werden, bis die jeweils erfassten maximalen Peaks des Drehmoments den vorgegebenen Maximalwert für das Drehmoment im Wesentlichen erreicht haben.

9. Verfahren nach wenigstens einem der vorhergehenden Ansprüche, **dadurch gekennzeichnet, dass** ein das Drehmoment beeinflussender Vorgang und/oder ein diesem Vorgang zugeordnetes Prozesssignal erkannt wird, und eine temporäre Anpassung des Drehmoments der zumindest einen Schneckenwelle (108) erfolgt, wenn ein das Drehmoment beeinflussender Vorgang und/oder ein diesem Vorgang zugeordnetes Prozesssignal erkannt bzw. erfasst wurde.

10. Verfahren nach Anspruch 9, **dadurch gekennzeichnet, dass** eine zuvor geplante oder aktuell durchgeführte Anpassung des Drehmoments der zumindest einen Schneckenwelle (108) zumindest temporär gestoppt wird, wenn ein das Drehmoment beeinflussender Vorgang und/oder ein diesem Vorgang zugeordnetes Prozesssignal erkannt bzw. erfasst wurde.

11. Verfahren nach wenigstens einem der vorhergehenden Ansprüche, **dadurch gekennzeichnet, dass** eine Standard-Schwankungsbreite des Drehmoments basierend auf bestehenden oder erfassten Daten, insbesondere bei entsprechenden Betriebspunkten des Extruders (100), Rezepturen oder Prozessen, definiert wird.

12. Verfahren nach wenigstens einem der vorhergehenden Ansprüche, **dadurch gekennzeichnet, dass** das Anpassen des Drehmoments der zumindest einen Schneckenwelle (108) automatisch, halbautomatisch oder manuell erfolgt.

13. Verfahren nach wenigstens einem der vorhergehenden Ansprüche, **dadurch gekennzeichnet, dass** die Anpassung des Drehmoments der zumindest einen Schneckenwelle (108) gestoppt wird, wenn die maximalen Peaks des Drehmoments den vorgegebenen Maximalwert für das Drehmoment im Wesentlichen erreicht haben.

14. Verfahren nach wenigstens einem der vorhergehenden Ansprüche, **dadurch gekennzeichnet, dass** im Betrieb des Extruders (100) die Schwankungsbreite fortlaufend analysiert und das Drehmoment der zumindest einen Schneckenwelle (108) bedarfsweise, insbesondere mittels Durchsatzerhöhung oder Durchsatzverringerung und/oder Drehzahlerhöhung oder Drehzahlverringerung, angepasst wird.

15. Verfahren nach wenigstens einem der vorhergehenden Ansprüche, **dadurch gekennzeichnet, dass** das Erfassen des Drehmomentsignals und/oder das Anpassen des Drehmoments der zumindest einen Schneckenwelle (108) in Echtzeit erfolgt und/oder dass das Drehmomentsignal und/oder die Prozesssignale und/oder Daten in Echtzeit, insbesondere mit einer Steuerung (102), wie Extrudersteuerung (102), verarbeitet werden.

16. Computerprogramm, das eine Steuerung (102) und/oder einen Extruder (100), dazu veranlasst, ein Verfahren nach wenigstens einem der vorhergehenden Ansprüche auszuführen und/oder umfassend Programmcodemittel, um bei einem Ausführen des Computerprogramms auf zumindest einem Prozessor ein Verfahren nach wenigstens einem der vorhergehenden Ansprüche oder zumindest einen der Schritte des Verfahrens nach wenigstens einem der vorhergehenden Ansprüche durchzuführen.

17. Steuerung (102) für einen Extruder (100), wobei die Steuerung (102) dazu eingerichtet und bestimmt ist, ein Verfahren nach wenigstens einem der vorhergehenden Ansprüche 1 bis 15 auszuführen und/oder wobei die Steuerung (102) wenigstens einen Prozessor und das Computerprogramm nach Anspruch 16 aufweist.

18. Extruder (100) umfassend einen Zylinder (104), wenigstens eine in dem Zylinder (104) drehbar aufgenommene und durch einen Motor (106) drehantreibbare Schneckenwelle (108), wobei der Extruder (100) dazu eingerichtet und bestimmt ist, ein Verfahren nach wenigstens einem der vorhergehenden Ansprüche 1 bis 15 auszuführen und/oder eine Steuerung (102) nach Anspruch 17 aufweist.
